# EUROPÄISCHE PATENTANMELDUNG

(11) **EP 2 322 571 A1**
(43) Veröffentlichungstag der Anmeldung: **18.05.2011**
(21) Anmeldenummer: 09175201.4
(22) Anmeldetag: 06.11.2009
(51) Int. Cl.: C08G 18/10, C08G 18/18, C09D 175/04, C08G 18/20, C09J 175/04

(54) **Zweikomponentige Klebstoff- oder Dichtstoffzusammensetzung mit Beschleunigungskomponente**

(71) Anmelder: Sika Technology AG, 6340 Baar (CH)
(72) Erfinder: Schmider, Martin, 78462, Konstanz (DE); Jäger, Urs, 8645, Jona (CH); Kramer, Andreas, 8006, Zürich (CH)
(74) Vertreter: Sika Patent Attorneys

(57) **Zusammenfassung**

Die vorliegende Erfindung betrifft eine zweikomponentige Klebstoff- oder Dichtstoffzusammensetzung, welche aus eine ersten Komponente K1 und einer Beschleunigerkomponente K2 besteht. Die erste Komponente K1 enthält hierbei mindestens ein Isocyanatgruppen-aufweisendes Polyurethanpolymer und die Beschleunigerkomponente K2 enthält mindestens ein Salz eines tertiären Amines und/oder ein organisches quarternäres Ammoniumsalz. Diese Zusammensetzungen weisen ein für grössere Verklebungen optimales Aushärtungsverhalten auf, welche insbesondere eine genügend lange Offenzeit kombiniert mit einem schnellen Festigkeitsaufbau aufweisen.

## Beschreibung

### Technisches Gebiet

Die Erfindung betrifft das Gebiet der Polyurethankleb- und Polyurethanklebdichtstoffe, insbesondere für das Gebiet der industriellen Verklebung.

### Stand der Technik

Polyurethankleb- und -dichtstoffe sind seit längerem bekannt und werden in industriellen Prozessen routinemässig eingesetzt. Einkomponentige Polyurethanklebstoffe und -Dichtstoffe härten durch Feuchtigkeit aus. Allerdings erfolgt die Aushärtung, durch Diffusionsprozesse bedingt, sehr langsam und es werden Befestigungsmittel benötigt, um die zu verklebenden Teile zu fixieren. Deshalb ist es ein grosses Problem der einkomponentigen Polyurethanklebstoffe und Polyurethandichtstoffe, dass deren Aushärtung sehr langsam erfolgt.

Als schnelle Klebstoffsysteme werden oftmals auch zweikomponentigen (Meth)acrylatklebstoffe eingesetzt, welche jedoch gegenüber Polyurethanklebstoffen den Nachteil aufweisen, dass sie einerseits gefährliche Peroxide aufweisen und andererseits, dass in Gegenwart von Luft, bzw. Sauerstoff, eine störende Klebrigkeit an der Oberfläche auftritt.

Anderseits sind zweikomponentige Polyurethanklebstoffe bekannt, bei welchem die zweite Komponente eine Härterkomponente darstellt und welche Substanzen enthält, welche mit den in der ersten Komponenten vorhandenen Isocyanaten in einer Additionsreaktion reagiert und zur Vernetzung führt. Diese Aushärtung erfolgt allerdings sehr rasch, praktisch unmittelbar, nach der Mischung der zwei Komponenten. Somit sind diese Art von Klebstoffen in Praxis lediglich für das Punktkleben oder das Verkleben von kleinen Teilen geeignet. Beim Verkleben von grösseren Teilen, wie beispielsweise Automobilscheiben, ist eine derartige Aushärtungsgeschwindigkeit zu schnell, da die Offenzeit bereits vor dem Kontaktieren mit dem zweiten Substrat, insbesondere vor dessen Endpositionieren, überschritten wird, und deshalb gewisse Verklebungen entweder nur unter extremen Anforderungen an den Klebstoffapplikations- bzw. Fügeprozess oder gar nicht erreicht werden können. Es versteht sich von selbst, dass bei diesen zweikomponentigen Kleb- und Dichtstoffen die Fehlertoleranz extrem klein ist. Ein weiterer Nachteil der zweikomponentigen Polyurethanklebstoffe aufgrund des Aushärtemechanismus einer Additionsreaktion sind die hohen Anforderungen, welche an die Mischqualität gestellt werden müssen, da bereits kleine Mischfehler zu starken Abfall der mechanischen Werten führen können.

Um die langsame Aushärtung der einkomponentigen Polyurethanklebstoffe und Polyurethandichtstoffe zu vergrössern, können zu einem gewissen Mass Beschleuniger wie tertiäre Amine oder OrganoZinnverbindungen zugesetzt werden. Diese Beschleuniger haben jedoch entweder den Nachteil, dass die Beschleunigung nur geringfügig erfolgt oder aber die Lagerstabilität stark reduziert wird.

Der Zusatz von Wasser zu einem einkomponentigen Polyurethanklebstoff oder Polyurethandichtstoff in Form einer zweiten Komponente ist eine weitere Form der Beschleunigung. In diesem Fall ist die Beschleunigung sehr stark, es treten jedoch neben den oben geschilderten Nachteilen der zweikomponentigen Zusammensetzung weitere Probleme, nämlich Blasenbildung und allenfalls, vor allem bei Benutzung eines Statikmischers, Schichtenbildung von mangelhaft ausgehärtetem Material auf.

In einem weiteren Ansatz dieses Problem zu lösen, wurde von WO 2007/135187 A1 vorgeschlagen, einem einkomponentigen Polyurethanklebstoff oder Polyurethandichtstoff Zink-, Blei oder Eisen(III)-Komplexe zuzumischen. Es zeigte sich jedoch, dass mit diesem System die Aushärtung beschleunigt werden kann, jedoch nicht in dem Masse, wie es für schnelle industrielle Prozesse gefordert wird, nämlich derart dass die Vernetzung innert 15 Minuten bereits ein derartiges Niveau erreicht werden soll, dass der Verbund bereits belastet werden kann.

### Darstellung der Erfindung

Aufgabe der vorliegenden Erfindung ist es daher, einen Dicht- oder Klebstoff auf Polyurethanbasis zur Verfügung zu stellen, welcher ein Erhärtungsverhalten zeigt, dass er einerseits eine genügend grosse Offenzeit aufweist, dass das Verkleben von grossflächigen Substraten ermöglicht wird, andererseits jedoch so schnell ist, dass bereits nach 15 Minuten ein derartiges Niveau erreicht wird, dass der Verbund bereits belastet werden kann.

Überraschenderweise hat sich gezeigt, dass eine zweikomponentige Klebstoff- oder Dichtstoffzusammensetzung gemäss Anspruch 1 diese Aufgabe löst. Derartige Zusammensetzungen überwinden insbesondere auch die Nachteile des Standes der Technik. Es hat sich gezeigt, dass derartige Kleb- oder Dichtstoffe im Wesentlichen identische mechanische Endfestigkeiten aufweisen, wie die entsprechenden einkomponentigen Kleb- oder Dichtstoffe, die lediglich aus der ersten Komponente K1 bestehen, d.h. ohne den Zusatz der Beschleunigerkomponente K2, und lediglich über langzeitliche Aushärtung über Luftfeuchtigkeit ausgehärtet werden. Es hat sich zudem gezeigt, dass die ausgehärteten zweikomponentigen Klebstoff- oder Dichtstoffe vorteilhaft im Wesentlichen frei von Blasen oder Schichten von ungenügender Mechanik sind, ganz im Gegensatz zu solchen Stand der Technik Klebstoffen, bei welchem eine Wasserkomponente insbesondere über einen Statikmischer zugeführt werden, sind.

Die Zusammensetzungen eignen sich aufgrund ihres Aushärteverhaltens insbesondere als Klebstoffe oder Dichtstoffe, vor allem für industrielle Anwendungen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Gegenstand der vorliegenden Erfindung ist eine zweikomponentige Klebstoff- oder Dichtstoffzusammensetzung bestehend aus einer ersten Komponente K1 und einer Beschleunigerkomponente K2.

Die erste Komponente K1 enthält mindestens ein Isocyanatgruppen-aufweisendes Polyurethanpolymer und die Beschleunigerkomponente K2 enthält mindestens ein Salz eines tertiären Amines und/oder ein organisches quarternäres Ammoniumsalz.

Der Begriff "primäre Aminogruppe" bezeichnet im vorliegenden Dokument eine Aminogruppe in der Form einer NH₂-Gruppe, die an einen organischen Rest gebunden ist. Der Begriff "sekundäre Aminogruppe" bezeichnet eine Aminogruppe, in der das Stickstoffatom an zwei organische Reste gebunden ist, welche auch gemeinsam Teil eines Rings sein können. Der Begriff "tertiäre Aminogruppe" bezeichnet eine Aminogruppe, in der das Stickstoffatom (= tertiärer Amin-Stickstoff) an drei organische Reste gebunden ist, wobei zwei dieser Reste auch gemeinsam Teil eines Rings sein können.

Der Begriff "quarternäre Ammoniumgruppe" bezeichnet eine Aminogruppe, in der an einem positiv geladenen Stickstoffatom vier organische Reste gebunden sind. Dementsprechend wird eine Verbindung, welche eine quarternäre Ammoniumgruppe aufweist als "quarternären Ammoniumverbindung" bezeichnet und unter einem quarternären Ammoniumsalz" eine salzartige Verbindung einer quarternären Ammoniumverbindung und mindestens eines Anions verstanden.

Als "Raumtemperatur" wird im vorliegenden Dokument eine Temperatur von 25 °C bezeichnet.

Mit "Poly" beginnende Substanznamen wie Polyamin, Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Die fett markierten Bezeichnungen wie K1, K2 S1, S2 oder dergleichen im vorliegenden Dokument dienen lediglich für das bessere Leseverständnis und Identifizierung.

Unter "im Wesentlichen frei" wird in diesem Dokument eine Menge verstanden, welche nur mehr geringe Anteile, typischerweise weniger als 1 Gew.-%, insbesondere geringer als 0.1 Gew.-%, am betreffenden Stoff enthält.

Die erste Komponente K1 enthält mindestens ein Isocyanatgruppen-aufweisendes Polyurethanpolymer.

Das Isocyanatgruppen aufweisende Polyurethanpolymer ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer unter Mitverwendung von Weichmachern hergestellt werden, wobei die verwendeten Weichmacher keine gegenüber Isocyanaten reaktiven Gruppen enthalten.

Als Polyol für die Herstellung des Polyurethanpolymers können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole.

Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 bis 30'000 g/mol, insbesondere von 400 bis 20'000 g/mol, und weisen bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole.

Besonders bevorzugt sind Polyetherpolyole, insbesondere Polyoxypropylen- und Polyoxypropylenpolyoxyethylenpolyole, sowie flüssige Polyesterpolyole und Polyetherpolyesterpolyole.

Besonders bevorzugt sind weiterhin amorphe, teilkristalline und kristalline Polyester- und Polycarbonatdiole mit einem Schmelzpunkt im Bereich von 40 °C bis 80 °C, insbesondere 50 °C bis 70 °C, insbesondere Adipinsäure/Hexandiol-Polyester, Azelainsäure/Hexandiol-Polyester, Dodecandicarbonsäure/Hexandiol-Polyester und Polycarbonatdiole auf der Basis von Hexandiol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung des Isocyanatgruppen aufweisenden Polyurethanpolymers werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-lsocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Das Polyurethanpolymer weist ein mittleres Molekulargewicht von vorzugsweise 500 g/mol oder darüber auf. Insbesondere weist das Polyurethanpolymer ein mittleres Molekulargewicht von 1000 bis 30'000 g/mol, bevorzugt von 2000 bis 10'000 g/mol, auf. Weiterhin weist das Polyurethanpolymer bevorzugt eine mittlere NCO-Funktionalität im Bereich von 1.7 bis 3, insbesondere 1.8 bis 2.5, auf.

Die ersten Komponente **K1** enthält vorzugsweise neben dem mindestens einen Isocyanatgruppen-aufweisenden Polyurethanpolymer weitere Bestandteile.

Mögliche derart weitere Bestanteile sind beispielsweise:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln,
- Fasern, beispielsweise aus Polyethylen;
- Pigmente, beispielsweise Titandioxid oder Eisenoxide;
- blockierte bzw. latente Isocyanathärter, insbesondere solche welche ausgewählt sind aus der Gruppe bestehend aus Polyaldiminen, Oxazolidinen, Enaminen und Ketiminen;
- Katalysatoren, welche die Hydrolyse der Aldiminogruppen beschleunigen, insbesondere Säuren, insbesondere organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, insbesondere Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris-(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer, insbesondere Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, monomere Diisocyanate, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Siiane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz der weiteren Bestandteile der Zusammensetzung darauf zu achten, dass diese die Lagerstabilität der Zusammensetzung nicht stark beeinträchtigen. Dies bedeutet, dass sie insbesondere kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die erste Komponente **K1** mindestens einen Katalysator. Der Katalysator ist insbesondere eine Metallverbindung und/oder eine tertiäre Aminogruppen enthaltende Verbindung. Die Menge des Katalysators ist vorzugsweise 0.5 bis 3.0 Gew.-%, insbesondere 1 bis 2 Gew.-%, bezogen auf das Gewicht der ersten Komponente **K1**.

Bevorzugt enthält die erste Komponente **K1** weiterhin mindestens einen Füllstoff, insbesondere Russ und/oder Kreide. Die Menge des Füllstoffes ist vorzugsweise 10 bis 50 Gew.-% insbesondere 20 bis 40 Gew.-%, bezogen auf das Gewicht der ersten Komponente **K1**.

Bevorzugt enthält die erste Komponente **K1** weiterhin mindestens ein Polyaldimin. Als Polyaldimin sind besonders die Polyaldimine, wie sie in bereits in US 2006/149025 A1, US 2009/176944 A1, US 2009/099333 A1, WO 2008/116901 A1, WO 2009/010522 A1 offenbart sind. Meist bevorzugt weisen die Polyaldimine die Strukturformel (111) auf.

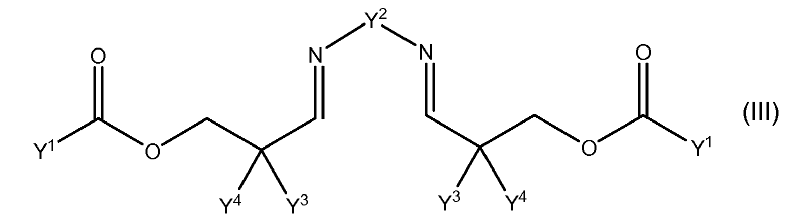

Hierbei stehen Y¹ unabhängig von einander je für einen Alkylrest mit 11 bis 30 C-Atomen, bevorzugt 11 bis 16 C-Atomen; Y³ und Y⁴ unabhängig von einander je für einen Alkylrest mit 1 bis 12 C-Atomen, bevorzugt je für eine Methylgruppe; und Y² für ein Diamin **DA** mit zwei primären Aminogruppen nach Entfernung dieser zwei Aminogruppen.

Vorzugsweise ist das Diamin **DA** ausgewählt aus der Gruppe bestehend aus 1,6-Hexamethylendiamin, 1,5-Diamino-2-methylpentan (MPMD), 1,3-Diaminopentan (DAMP), 2,2,4- und 2,4,4-Trimethylhexamethylendiamin, 4-Aminomethyl-1,8-octandiamin, 1-Amino-3-aminomethyl-3,5,5-trimethylcyclohexan (= Isophorondiamin oder IPDA), 1,3- und 1,4-Xylylendiamin, 1,3- und 1,4-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo-[5.2.1.0²,⁶]decan, 1,2-, 1,3- und 1,4-Diaminocyclohexan, Polyoxyalkylen-Polyamine mit zwei Aminogruppen, insbesondere Jeffamine^{®} EDR-148, Jeffamine^{®} D-230 und Jeffamine^{®} D-400; sowie insbesondere Mischungen von zwei oder mehr dieser vorgenannten Diamine.

Meist bevorzugt handelt es sich bei ersten Komponente **K1** um einen einkomponentigen feuchtigkeitshärtenden Polyurethan-Dichtstoff oder -Klebstoff.

Derartige einkomponentige feuchtigkeitshärtenden PolyurethanDichtstoffe oder -Klebstoffe sind kommerziell erhältlich, beispielsweise unter dem Reihen-Handelsnamen Sikaflex® und SikaTack® von Sika Schweiz AG. Besonders bevorzugt handelt es sich hierbei um SikaTack®-Move^{IT}, ein einkomponentiger feuchtigkeitshärtender Polyurethan-Klebstoffe, welcher von Sika Schweiz AG kommerziell vertrieben wird.

Derartige einkomponentigen feuchtigkeitshärtenden PolyurethanDichtstoffe oder -Klebstoffe härten in Gegenwart von Feuchtigkeit bereits alleine, das heisst ohne die Gegenwart einer Beschleunigerkomponente **K2**, aus. Die Aushärtung benötigt hierbei (ohne Beschleunigerkomponente **K2**) jedoch einen längeren Zeitraum von einigen Stunden oder Tagen. Die Verwendung einer derartigen ersten Komponente K1 hat einige Vorteile. Zum einen kann ein Kunde auf allenfalls bereits bei ihm für weniger zeitkritische Verklebungen eingesetzte Polyurethanklebstoffe zurückgreifen. Zum anderen führen Dosierfehler oder Inhomogenitäten bei der Zumischung der Beschleunigerkomponente K2 nicht zu einem Versagen der Verklebung, wie sie bei anderen zweikomponentigen Kleb- und Dichtstoffen häufig der Fall sind. Durch die Nachhärtung des Kleb- oder Dichtstoffes über die Feuchtigkeit erreicht der Klebstoff nach einigen Stunden oder Tagen in etwa dieselben mechanischen Eigenschaften, wie sie bei einer richtigen Zumischung der Beschleunigerkomponente **K2** erreicht werden.

Die Beschleunigerkomponente **K2** enthält mindestens ein Salz eines tertiären Amines und/oder ein organisches quarternäres Ammoniumsalz.

In einer ersten Ausführungsform enthält die Beschleunigerkomponente **K2** ein Salz eines tertiären Amines. Hierbei handelt es sich insbesondere um eine Verbindung, welche eine tertiäre Aminogruppe sowie eine Carboxylatgruppe aufweist.

Bei diesem Salz eines tertiären Amines sind die an den tertiären Amin-Stickstoff gebundenen organischen Reste vorzugsweise aliphatische Reste. Bevorzugt enthält mindestens einer dieser organischen Reste aromatische Strukturelemente. Diese aromatischen Strukturelemente sind jedoch nicht direkt an den tertiären Amin-Stickstoff gebundenen.

Das Salz des tertiären Amines ist vorzugsweise eine Verbindung der Formel (II).

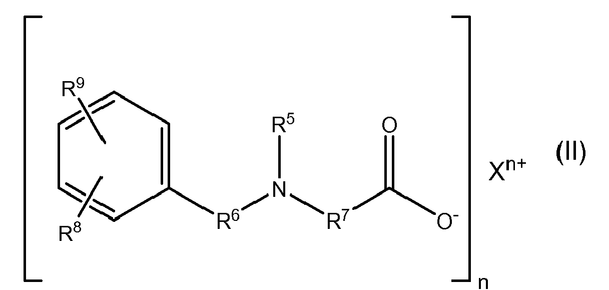

Hierbei steht R⁵ für eine Alkylgruppe mit 1 bis 6 C-Atomen.

Weiterhin stehen R⁶ und R⁷ je unabhängig voneinander für eine Alkylengruppe mit 1 bis 6 C-Atomen;
R⁸ für H oder eine Alkylgruppe mit 1 bis 10 C-Atomen;
R⁹ für H oder OH und Xⁿ⁺ für ein Kation mit der Ladung n+.

Schliesslich weist n ein Wert von 1, 2 oder 3 auf.

Besonders bevorzugt steht R⁵ für CH₃, R⁶ für CH₂, R⁷ für CH₂, R⁸ für eine n-Alkylgruppe mit 9 C-Atomen, R⁹ für OH, n für 1 und X für Na.

Ein derartig bevorzugtes Salz eines tertiären Amines ist unter dem Namen CURITHANE® 52 Catalyst von Air Products, bzw. Huntsman, kommerziell erhältlich.

In einer zweiten Ausführungsform enthält die Beschleunigerkomponente **K2** ein organisches quarternäres Ammoniumsalz. Vorzugsweise ist dieses organische quarternäre Ammoniumsalz eine Verbindung mit mindestens einem gesättigten Ring, insbesondere ein Salz einer quarternären Ammoniumverbindung der der Formel (Ia) oder Formel (Ib). 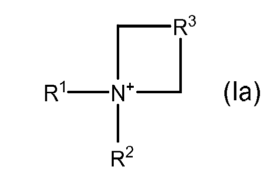 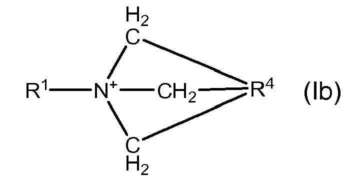 Hierbei stehen R¹ und R² unabhängig voneinander je für einen einwertigen organischen Rest, insbesondere eine Alkylgruppe, mit 1 bis 12 C-Atomen. Weiterhin steht R³ für einen zweiwertigen organischen Rest mit 2 bis 20 C-Atomen, welcher gegebenenfalls Sauerstoff- und oder Stickstoffatome, insbesondere in Form von Ether- oder Carboxy-Sauerstoffatomen oder Amin- oder Ammoniumstickstoffatomen, aufweist. Schliesslich steht R⁴ für einen dreiwertigen organischen Rest mit 3 bis 24 C-Atomen, welcher gegebenenfalls Sauerstoff- und oder Stickstoffatome, insbesondere in Form von Ether- oder Carboxy-Sauerstoffatomen oder Amin- oder Ammoniumstickstoffatomen, aufweist.

Als besonders geeignet haben sich quarternäre Ammioniumsalze von 1,4-Diazabicyclo[2.2.2]octan (DABCO) der Formel (Ib-1) gezeigt.

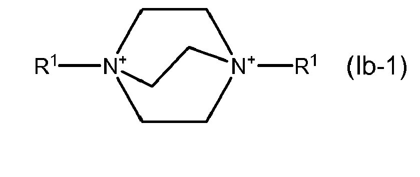

Ein bevorzugtes derartiges quarternäres Ammoniumsalz kann unter dem Handelsnamen DABCO TMR-3® Catalyst von Air Product, bzw. Huntsman kommerziell erhalten werden.

Die Beschleunigerkomponente .**K2** ist vorzugsweise im Wesentlichen frei von Wasser oder organischen Isocyanat-reaktiven Verbindungen. Obwohl nicht erwünscht, ist es durchaus möglich, dass geringe Anteile an Wasser durch die zum Aufbau der Beschleunigerkomponente **K2** verwendeten Stoffe geringe Anteile von Wasser, insbesondere aufgrund deren mangelhaften Trocknung, eingeschleppt werden. Geringe Mengen an Wasser oder organischen Isocyanat-reaktiven Verbindungen sind zwar nicht sehr störend aber dennoch meist unerwünscht. Wenn die Beschleunigerkomponente **K2** grosse Mengen an Wasser und/oder organischen Isocyanat-reaktiven Verbindungen, insbesondere an Polyolen oder Polyaminen, aufweist, reagieren diese beim Mischen der Komponenten **K1** und **K2** mit dem Isocyanatgruppen-aufweisenden Polyurethanpolymer, wodurch die Mechanik im Vergleich zur langsamen Aushärtung der Komponente **K1** allein mit Luftfeuchtigkeit stark verändert wird. Weist die Beschleunigerkomponente **K2** wesentliche Anteile an Wasser auf, bilden sich typischerweise grosse Mengen an Blasen oder grössere bereiche mit geschädigter Mechanik aus, was selbstverständlich grosse Nachteile für den Klebverbund mit sich bringt.

Deshalb ist die Beschleunigerkomponente **K2** bevorzugt gänzlich frei von Wasser oder organischen Isocyanat-reaktiven Verbindungen.

Die Beschleunigerkomponente **K2** kann weitere Bestandteile aufweisen.

Mögliche derart weitere Bestanteile sind beispielsweise:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln,
- Fasern, beispielsweise aus Polyethylen;
- Pigmente, beispielsweise Titandioxid oder Eisenoxide;
- blockierte bzw. latente Isocyanathärter, insbesondere solche welche ausgewählt sind aus der Gruppe bestehend aus Polyaldiminen, Oxazolidinen, Enaminen und Ketiminen;
- Rheologie-Modifizierer, insbesondere Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, monomere Diisocyanate, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Siiane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstumhemmende Substanzen.

Es ist vorteilhaft, beim Einsatz der weiteren Bestandteile der Zusammensetzung darauf zu achten, dass diese die Lagerstabilität der Zusammensetzung nicht stark beeinträchtigen. Vorzugsweise werden gewisse Bestandteile vor dem Einmischen in die Zusammensetzung chemisch oder physikalisch getrocknet.

Besonders bevorzugt weist die Beschleunigerkomponente **K2** weiterhin mindestens einen Weichmacher und mindestens einen Füllstoff auf.

Sowohl die erste Komponente **K1** als auch die Beschleunigerkomponente **K2** sind vorzugsweise von pastöser Konsistenz. Vorzugsweise weisen sie eine vergleichbare Viskosität auf.

Das Salz des tertiären Amines oder des organischen quarternären Ammoniumsalzes ist vorzugsweise in einer Menge von 0.05 bis 3 Gew.-%, insbesondere von 0.5 bis 2 Gew.-%, bevorzugt von 1 bis 1.5 Gew.-%, in Bezug auf das Gewicht der ersten Komponente **K1** in der Zusammensetzung vorhanden.

Die erste Komponente **K1** und die Beschleunigerkomponente **K2** werden vor oder während der Anwendung miteinander gemischt.

Das Mischverhältnis von der ersten Komponente K1 und der Beschleunigerkomponente **K2** ist unter anderem insbesondere abhängig von der Menge Salz des tertiären Amines oder des organischen quarternären Ammoniumsalzes zur Menge ein Isocyanatgruppen-aufweisendes Polyurethanpolymer. Es wird bevorzugt, wenn das Gewichts-Mischverhältnis von der ersten Komponente K1 und der Beschleunigerkomponente K2 zwischen 39:1 und 9:1, bevorzugt zwischen 29:1 und 12:1, liegt.

Ein weiterer Aspekt der vorliegenden Erfindung betrifft ein Verfahren zur Mischung einer zweikomponentigen Klebstoff- oder Dichtstoffzusammensetzung, wie sie vorgängig im Detail beschreiben wurde. Insbesondere wird hierbei die Beschleunigerkomponente **K2** der Komponente **K1** unmittelbar vor der Applikation oder während der Applikation zugemischt.

Die Zumischung der Beschleunigerkomponenten **K2** zur Komponente **K1** erfolgt in einer Ausführungsform vor dem Eintritt der Komponente K1 in einem Statikmischer.

Die Vermischung von Komponente **K1** mit Beschleunigerkomponente K2 erfolgt in einer weiteren Ausführungsform n einem dynamischen Mischer.

Aus dem Mischen der ersten Komponente **K1** und der Beschleunigerkomponente **K2** einer vorgängig im Detail beschriebenen zweikomponentigen Klebstoff- oder Dichtstoffzusammensetzung resultiert Gemischter Kleb- oder Dichtstoff, welcher einen weiteren Aspekt der vorliegenden Erfindung darstellt.

Die vorgängig beschriebene Klebstoff- oder Dichtstoffzusammensetzung ist besonders geeignet zur Verwendung als Kleb- oder Dichtstoff, insbesondere zur Herstellung oder Reparatur von Fahrzeugen oder Fahrzeugteilen.

Wie bereits vorgängig im Detail beschrieben, bewirkt die Beschleunigerkomponente **K2** eine beschleunigte Aushärtung der ersten Komponente **K1.**

Somit stellt ein Verfahren zum beschleunigten Aushärten eines einkomponentigen feuchtigkeitshärtenden Polyurethan- Dichtstoff oder-Klebstoff, bei welchem diesem eine vorgängig beschriebene Beschleunigerkomponente K2 zugemischt wird, einen weiteren Aspekt der vorliegenden Erfindung dar.

Ein weiterer Aspekt der vorliegenden Erfindung betrifft ein Klebstoff- oder Dichtstoff-Applikationsverfahren, dadurch gekennzeichnet, dass es die folgenden Schritte umfasst:
(i) Mischen der zwei Komponenten **K1** und **K2** einer zweikomponentigen Klebstoff- oder Dichtstoffzusammensetzung, wie sie vorgängig im Detail beschrieben wurde;
(ii) Applizieren der nach Schritt (i) gemischten Komponenten auf eine Fügeteiloberfläche **S1**;
(iii) Kontaktieren der nach Schritt (i) gemischten Komponenten mit einer zweiten Fügeteiloberfläche **S2**;
(iv) Aushärten der gemischten Komponenten unter dem Einfluss von Wasser, insbesondere in Form von Luftfeuchtigkeit.

Das Substrat S2 besteht hierbei aus dem gleichen oder einem unterschiedlichen Material wie das Substrat **S1**.

Aus dem vorgängig beschriebenen Klebstoff- oder Dichtstoff-Applikationsverfahren resultiert verklebter Artikel.

Es wurde überraschenderweise festgestellt, dass die vorgängig beschriebenen Zusammensetzungen äusserst interessante Eigenschaften aufweisen. Sie weisen nach dem Mischen ein äusserst schnelles Aushärten auf, weisen dennoch aber in der ersten Phase nach dem Mischen jedoch eine Zeitspanne auf, in welcher die Viskosität des Kleb- oder Dichtstoffs beinahe unverändert bleibt. In dieser Zeit lassen sich die zu verklebenden Substrate positionieren bzw. leicht verschieben, so dass eine optimale Klebegeometrie durch Justieren eingestellt werden kann. Nach Ablauf dieser Zeitspanne jedoch steigt die Viskosität und damit die Klebefestigkeit aufgrund der ablaufenden Vernetzungsreaktionen stark an, was es erlaubt, den Klebverbund innert kurzer Zeit mit Kräften zu belasten, wie sie üblicherweise beim Transportieren oder Verschieben des Verbundkörpers auf einem Förderband üblich sind. Es sind auch keine Fixierungsmittel, welche den Verbund zusammen halten nötig.

Kleb- und Dichtstoffe, welche ein derartiges Festigkeitsaufbauverhalten aufweisen, sind optimal für industrielle Prozesse geeignet. Beispielsweise verstreicht im Einbau von Automobilscheiben eine gewisse Mindestzeitspanne, welche zwischen dem Auftragsbeginn des Klebstoffs und der Endpositionierung der Scheibe auf dem Karosserieflansch verstreicht.

Für die Charakterisierung dieses Festigkeitsverhaltens kann die Viskosität herangezogen werden. Es lassen sich mit der vorliegenden Erfindung insbesondere Kleb- oder Dichtstoffe erreichen, welche das folgende Festigkeits- bzw. Viskositätsverhalten zeigen:
- Beim Mischen der zwei Komponenten (t₀) weisen die gemischten Klebstoffe eine Viskosität von unter weniger als 1500 Pa•s auf.
- Nach 5 Minuten nach Mischen der zwei Komponenten (t₅ₘᵢₙ) weisen die gemischten Klebstoffe eine Viskosität von unter weniger als 2200 Pa•s auf.
- Nach 15 Minuten nach dem Mischen der zwei Komponenten (t₁₅ₘᵢₙ) weisen die gemischten Klebstoffe eine Viskosität von über 2500 Pa•s, insbesondere von über 5000 Pa•s, liegt.

Die Erfahrung hat gezeigt, dass eine unter diesen Bedingungen gemessene Viskosität von etwa 2400 Pa•s die Grenze darstellt, bei welcher ein Verschieben des Substrates nicht mehr möglich ist, ohne den Klebverbund zu zerstören, d.h. der Klebverbund hat bei diesem Wert bereits eine Festigkeit erhalten, bei dem kleine Kräfte über den Klebverbund übertragbar sind.

Weiterhin hat sich gezeigt, dass ab 2500 Pa•s, vor allem ab 5000 Pa•s, die Festigkeit bereits derart angewachsen ist, dass bereits grössere Belastungen, wie sie zum Beispiel beim Transport erfolgen, über den Klebverbund übertragbar sind.

Es ist weiterhin bevorzugt, dass die gemischten Klebstoffe nach 10 Minuten nach dem Mischen der zwei Komponenten (t₁₀ₘᵢₙ) eine Viskosität aufweisen, welche zwischen 1500 und 5000 Pa•s liegt.

Diese hier angebenen Werte stellen komplexe Viskositäten dar, welche mittels Rheomat (Physica MCR 300) über Platte/Kegel mit einem Abstand von 1 mm oszillierend mit konstanter Amplitude (Gamma = 0.1) und konstanter Frequenz von 20 Hz bei einer Temperatur von 25°C gemessen wurde. Für diese Messungen erfolgte die Mischung der zwei (bei 25°C temperierten) Komponenten über einen dynamischen Mischer MBD 381-05-00, erhältlich von Sulzer, Schweiz, mit 460 Umdrehungen pro Minute (rpm).

Dem Fachmann ist klar, dass -wie jede chemische Reaktion- die für das Verhalten des Festigkeitsaufbaus wesentliche Vernetzungsreaktion abhängig von der Temperatur ist. Somit wird derselbe Klebstoff bei höherer Temperatur schneller vernetzen, was zu einer geringeren Offenzeit, führt, und sich vor allem in einer erhöhten Viskosität gemessen nach 5 Minuten äussert.

Es ist jedoch erwünscht, dass derselbe Klebstoff, welcher mit obiger Methode bei 25 °C gemessen wurde, bei einer entsprechenden Messung bei 35°C nach 5 Minuten nach dem Mischen der zwei Komponenten (t_{5min,} 35°C) eine Viskosität von weniger als 3200 Pa•s aufweist.

Es wurde weiterhin festgestellt, dass derartige Kleb- oder Dichtstoffe im Wesentlichen identische mechanische Endfestigkeiten aufweisen, wie die entsprechenden einkomponentigen Kleb- oder Dichtstoffe, die lediglich aus der ersten Komponente **K1** bestehen, d.h. ohne den Zusatz der Beschleunigerkomponente **K2,** und lediglich über langzeitliche Aushärtung über Luftfeuchtigkeit ausgehärtet werden. Deshalb sind derartige Kleb- oder Dichtstoffe auch weniger empfindlich gegenüber Mischfehlern, ganz im Gegensatz zu anderen zweikomponentigen Polyurethanklebstoffen (des Standes der Technik), bei denen es für das Aushärtung wichtig ist, dass die Polyisocyanat-Komponente und die Härter-Komponente exakt im richtigen Verhältnis und möglichst perfekt gemischt werden. Wird beispielsweise bei den erfindungsgemässen Zusammensetzungen die Beschleunigerkomponente falsch dosiert oder mangelhaft eingemischt, härtet der Klebstoff aufgrund der Aushärtung der ersten Komponente mit Luftfeuchtigkeit trotzdem aus, wenn auch für die Aushärtung eine längere Zeit benötigt wird. Dies hat aber den grossen wirtschaftlichen Vorteil, dass Artikel, welche mit derartigen fehlerhaften Verklebungen hergestellt wurden, nicht entsorgt oder mit grossem Aufwand wieder recycliert werden müssen, sondern lediglich an Luftfeuchtigkeit gelagert werden müssen und schlussendlich nach Aushärtung über Luftfeuchtigkeit weitgehend identische Klebfestigkeiten wie bei richtiger Dosierung der Beschleunigerkomponente aufweisen.

Es zeigte sich weiterhin, dass die ausgehärteten zweikomponentigen Klebstoff- oder Dichtstoffe im Wesentlichen frei von Blasen oder Schichten von ungenügender Mechanik sind, ganz im Gegensatz zu solchen Stand der Technik Klebstoffen, bei welchem eine Wasserkomponente insbesondere über einen Statikmischer zugeführt werden, sind.

### Beispiele

Die folgenden Beispiele dienen zur Illustration der vorgängig beschriebenen Erfindung.

Es wurden gemäss Tabelle 1 unterschiedliche Beschleuniger (ausser ***Ref.1*)** als Beschleunigerkomponenten formuliert. Diese Beschleunigerkomponenten wurden anschliessend zu SikaTack®-Move^{IT} als erste Komponente zugemischt, und zwar mittels eines Dynamik-Mischers MBD 381-05-00, erhältlich von Sulzer, Schweiz und einem Mischverhältnis von 95 Gewichtsteile SikaTack®-Move^{IT} zu 5 Gewichtsteile Beschleuniger. Die Vergleichsbeispiele zeigen das Aushärtungsverhalten des einkomponentigen Klebstoffs (***Ref.1**),* bzw. des Klebstoffs mit nicht-erfindungsgemässen Beschleunigern (***Ref.2 und Ref.3**).*

Es wurde zeitabhängig nach 0 Minuten ("*Visc*_{*0*/}*_{25°}c*"), 5 Minuten ("*Visc*_{*5*/*25°c*}"), 10 Minuten ("*Visc*_{*1O*/*25°C*}") und 15 Minuten ("*Visc*_{*15*/*25°C*}") nach dem Mischen der zwei Komponenten die komplexe **Viskosität** (Rheomat (Physica MCR 300), Platte/Kegel, Abstand = 1 mm, oszillierend mit konstanter Amplitude (Gamma = 0.1), konstanter Frequenz von 20 Hz, Temperatur = 25°C) gemessen wurde mit 460 Umdrehungen pro Minute gemessen.

Die gemessenen Werte sind in Tabelle 1 aufgelistet.

Von den wie vorgängig beschrieben gemischten Klebstoffzusammensetzungen, bzw. dem Referenzklebstoff ***Ref. 1***, wurden wurde je ein Klebstoff-Film von 2 mm Dicke hergestellt und dieser während 7 Tagen im Normklima (23°C, 50 % relative Luftfeuchtigkeit) ausgehärtet. Aus dem Film wurden dann Hanteln mit einer Länge von 75 mm, einer Steglänge von 30 mm und einer Stegbreite von 4 mm ausgestanzt. Von diesen Hanteln wurde die Zugfestigkeit (engl.: *Tensile strength*) und Bruchdehnung (engl.: *Elongation at break*) nach DIN EN 53504 bei Raumtemperatur geprüft, bei einer Zuggeschwindigkeit von 200 mm/min und in Tabelle 1 aufgeführt

**Tabelle 1. Klebstoffzusammensetzungen in Gewichtsteilen und Festigkeitsaufbau über zeitabhängige Viskositäten.**

| | ***Ref.1*** | ***Ref.2*** | ***Ref.3*** | ***1*** | ***2*** |
|---|---|---|---|---|---|
| **Erste Komponente** [Gew.-Teile] SikaTack®-Move^{IT} | 95 | 5 | 95 | 95 | 95 |
| | | | | | |
| **Beschleunigerkomponente**[Gew.-Teile] | 0 | 5 | 5 | 5 | 5 |
| Eisen(III)acetyl-acetonat [Gew.-%] | | 20 | | | |
| DABCO DC-1® Catalyst [Gew.-%] | | | 20 | | |
| DABCO TMR-3® Catalyst [Gew.-%] | | | | 20 | |
| CURITHANE® 52 [Gew.-%] | | | | | 20 |
| Diisodecylphthalat (DIDP) [Gew.-%] | | 40 | 40 | 40 | 40 |
| Kaolin [Gew.-%] | | 40 | 40 | 40 | 40 |
| | | | | | |
| *Visc*_{*0*/*25°C*} [Pa•s] | 745 | 740 | 987 | 943 | 986 |
| *Visc*_{*5*/*25°C*} [Pa•s] | 643 | 639 | 1070 | 1350 | 2090 |
| *Visc*_{*10*/}*₂₅∘_{C}* [Pa•s] | 640 | 635 | 1280 | 2000 | 3650 |
| *Visc*_{*15*/*25°C*} [Pa•s] | 650 | 651 | 1590 | 2780 | 5040 |
| Zugfestigkeit [MPa] | 7.8 | 7.7 | 7.9 | 7.6 | 7.4 |
| Bruchdehnung [%] | 250 | 249 | 258 | 283 | 273 |

Es zeigt sich aus dem Vergleich von ***Ref.1*** mit ***Ref.2**,* dass der Zusatz von Eisen(III)acetyl-acetonat zum Klebstoff im betrachteten Zeitfenster keine merkbare Beschleunigung zur Folge hat. Der Zusatz eines Aminbeschleunigers (DABCO) zum Klebstoff (***Ref.3***) hat eine ungenügende Beschleunigung zur Folge, während bei den erfindungsgemässen Beschleunigern (Beispiel ***1*** und ***2***), d.h. Salz eines tertiären Amines oder eine organisches quarternäres Ammoniumsalz im relevanten Zeitraum von bis 5 Minuten unter der für die Positionierung kritischen Grösse liegt, danach aber innerhalb von 15 Minuten einen hohen Wert erreicht, welcher grössere Belastungen erlaubt.

Weiterhin wurde von Beispiel 2 bei 35°C die komplexe Viskosität *Visc5*_{/}*₃₅∘_{C} -* analog zu *Visc*_{*5*/}*₂₅∘_{C} -* nach 5 Minuten nach dem Mischen der auf 35°C temperierten zwei Komponenten des Beispiels 2 gemessen. Die Viskosität entsprechend gemessen betrug 2950 Pa•s.

## Patentansprüche

1. Zweikomponentige Klebstoff- oder Dichtstoffzusammensetzung bestehend aus einer ersten Komponente **K1** und einer Beschleunigerkomponente **K2**;
**dadurch gekennzeichnet, dass**
die erste Komponente **K1** mindestens ein Isocyanatgruppen-aufweisendes Polyurethanpolymer enthält; und
die Beschleunigerkomponente **K2** mindestens ein Salz eines tertiären Amines und/oder ein organisches quarternäres Ammoniumsalz enthält.

2. Zweikomponentige Klebstoff- oder Dichtstoffzusammensetzung gemäss Anspruch 1, **dadurch gekennzeichnet, dass** das Salz eines tertiären Amines eine Verbindung ist, welche eine tertiäre Aminogruppe sowie eine Carboxylatgruppe aufweist.

3. Zweikomponentige Klebstoff- oder Dichtstoffzusammensetzung gemäss Anspruch 1 oder 2, **dadurch gekennzeichnet, dass** das organische quarternäre Ammoniumsalz eine Verbindung mit mindestens einem gesättigten Ring, insbesondere ein Salz einer quarternären Ammoniumverbindung der der Formel (la) oder Formel (lb) ist, 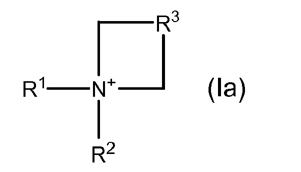 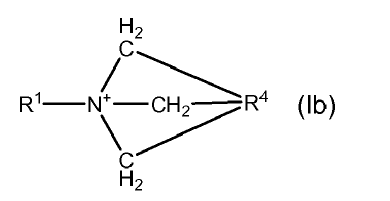 wobei R¹ und R² unabhängig voneinander je für einen einwertigen organischen Rest, insbesondere eine Alkylgruppe, mit 1 bis 12 C-Atomen stehen;
R³ für einen zweiwertigen organischen Rest mit 2 bis 20 C-Atomen steht, welcher gegebenenfalls Sauerstoff- und oder Stickstoffatome, insbesondere in Form von Ether- oder Carboxy-Sauerstoffatomen oder Amin- oder Ammoniumstickstoffatomen, aufweist;
R⁴ für einen dreiwertigen organischen Rest mit 3 bis 24 C-Atomen steht, welcher gegebenenfalls Sauerstoff- und oder Stickstoffatome, insbesondere in Form von Ether- oder Carboxy-Sauerstoffatomen oder Amin- oder Ammoniumstickstoffatomen, aufweist.

4. Zweikomponentige Klebstoff- oder Dichtstoffzusammensetzung gemäss Anspruch 1 oder 2, **dadurch gekennzeichnet, dass** das Salz eines tertiären Amines eine Verbindung der Formel (II) ist 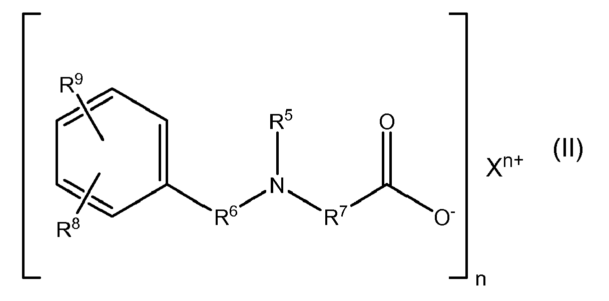 wobei R⁵ für eine Alkylgruppe mit 1 bis 6 C-Atomen steht;
R⁶ und R⁷ je unabhängig voneinander für eine Alkylengruppe mit 1 bis 6 C-Atomen stehen;
R⁸ für H oder eine Alkylgruppe mit 1 bis 10 C-Atomen steht;
R⁹ für H oder OH steht und
Xⁿ⁺ für ein Kation mit der Ladung n+
und n ein Wert von 1, 2 oder 3 aufweist.

5. Zweikomponentige Klebstoff- oder Dichtstoffzusammensetzung gemäss einem der vorhergehenden Ansprüche, **dadurch gekennzeichnet, dass** das Salz des tertiären Amines oder des organischen quarternären Ammoniumsalzes in einer Menge von 0.05 bis 3 Gew.-%, insbesondere von 0.5 bis 2 Gew.-%, bevorzugt von 1 bis 1.5 Gew.-%, in Bezug auf das Gewicht der ersten Komponente K1 in der Zusammensetzung vorhanden ist.

6. Zweikomponentige Klebstoff- oder Dichtstoffzusammensetzung gemäss einem der vorhergehenden Ansprüche, **dadurch gekennzeichnet, dass** die Beschleunigerkomponente **K2** weiterhin mindestens einen Weichmacher und mindestens einen Füllstoff aufweisen.

7. Zweikomponentige Klebstoff- oder Dichtstoffzusammensetzung gemäss einem der vorhergehenden Ansprüche, **dadurch gekennzeichnet, dass** die erste Komponente **K1** einen einkomponentigen feuchtigkeitshärtenden Polyurethan-Dichtstoff oder -Klebstoff darstellt.

8. Gemischter Kleb- oder Dichtstoff erhalten durch Mischen der ersten Komponente **K1** und der Beschleunigerkomponente **K2** einer zweikomponentigen Klebstoff- oder Dichtstoffzusammensetzung gemäss einem der Ansprüche 1 bis 7.

9. Verfahren zur Mischung einer zweikomponentigen Klebstoff- oder Dichtstoffzusammensetzung gemäss einer der Ansprüche 1 bis 7, **dadurch gekennzeichnet, dass** die Beschleunigerkomponente K2 der Komponente **K1** unmittelbar vor der Applikation oder während der Applikation zugemischt wird.

10. Verfahren gemäss Anspruch 9, **dadurch gekennzeichnet, dass** die Zumischung der Beschleunigerkomponenten **K2** zur Komponente K1 vor dem Eintritt der Komponente **K1** in einen Statikmischer erfolgt.

11. Verfahren gemäss Anspruch 9, **dadurch gekennzeichnet, dass** die Vermischung von Komponente **K1** mit Beschleunigerkomponente **K2** in einem dynamischen Mischer erfolgt.

12. Klebstoff- oder Dichtstoff-Applikationsverfahren, **dadurch gekennzeichnet, dass** es die folgenden Schritte umfasst
(i) Mischen der zwei Komponenten **K1** und **K2** einer zweikomponentigen Klebstoff- oder Dichtstoffzusammensetzung gemäss einem der Ansprüche 1 bis 7;
(ii) Applizieren der nach Schritt (i) gemischten Komponenten auf eine Fügeteiloberfläche **S1**;
(iii) Kontaktieren der nach Schritt (i) gemischten Komponenten mit einer zweiten Fügeteiloberfläche **S2**;
(iv) Aushärten der gemischten Komponenten unter dem Einfluss von Wasser, insbesondere in Form von Luftfeuchtigkeit;
wobei das Substrat **S2** aus dem gleichen oder einem unterschiedlichen Material wie das Substrat **S1** besteht.

13. Verklebter Artikel, der gemäss einem Klebstoff- oder Dichtstoff-Applikationsverfahren gemäss Anspruch 12 verklebt worden ist.

14. Verwendung einer Klebstoff- oder Dichtstoffzusammensetzung als Kleb- oder Dichtstoff, insbesondere zur Herstellung oder Reparatur von Fahrzeugen oder Fahrzeugteilen.

15. Verfahren zum beschleunigten Aushärten eines einkomponentigen feuchtigkeitshärtenden Polyurethan-Dichtstoff oder -Klebstoff **dadurch gekennzeichnet, dass** diesem eine Beschleunigerkomponente **K2**, wie sie in der zweikomponentigen Klebstoff- oder Dichtstoffzusammensetzung gemäss einem der Ansprüche 1 bis 7 beschrieben ist, zugemischt wird.
